# EUROPEAN PATENT APPLICATION

(11) **EP 4 753 103 A1**
(43) Date of publication of application: **03.06.2026**
(21) Application number: 24862985.9
(22) Date of filing: 03.07.2024
(51) Int. Cl.: H02J 7/34, H02J 1/06, H02J 7/00

(54) **ELECTRONIC DEVICE AND METHOD FOR CHARGING SAME**

(30) Priority: 04.09.2023 KR 20230117242; 08.09.2023 KR 20230119748
(71) Applicant: Samsung Electronics Co., Ltd., Suwon-si, Gyeonggi-do 16677 (KR)
(72) Inventor: KIM, Kyoungwon, Suwon-si Gyeonggi-do 16677 (KR)
(74) Representative: Gulde & Partner
(86) International application number: PCT/KR2024/009399
(87) International publication number: WO 2025/053402

(57) **Abstract**

An electronic device according to one embodiment may comprise: a connector including a power pin for supplying or receiving power to/from an external power source; a first charging circuit connected to a first battery; a second charging circuit connected to a second battery; a power management module including a first port connected to the power pin, a second port connected to a connection node of the first battery and the first charging circuit, and a third port connected to a system power line; and a first switch for selectively connecting the second charging circuit to the first port or the third port. Other various embodiments may be possible.

## Description

### TECHNICAL FIELD

The embodiments of the present disclosure relate to an electronic device and a method of charging the same.

### BACKGROUND ART

An electronic device may perform power delivery (PD) communication with a source (e.g., a travel adapter) and may receive power from the source.

The electronic device may function as a source, may perform PD communication with an external electronic device (or another electronic device), and may supply power to the external electronic device.

When charging the electronic device, charging and/or discharging may need to be performed within an allowable current of each battery for the battery safety. In batteries having a parallel structure, a current limiter may be required for each battery to charge and/or discharge each battery within an allowable current of each battery. However, as the current limiters are used as much as the number of batteries, direct current resistance (DCR) of a charging path may increase, the system may become more complex, and the implementation area and cost may increase.

The above information may be presented as the related art to help with the understanding of the disclosure. No arguments or decisions are raised as to whether any of the above description is applicable as the prior art related to the present disclosure.

The technical problem to be achieved in the present disclosure is not limited to the technical problem mentioned above, and other technical problems not mentioned above are clearly understood by one of ordinary skill in the art from the following description.

### DISCLOSURE OF THE INVENTION

### TECHNICAL SOLUTIONS

An electronic device according to an embodiment may include a connector including a power pin for supplying or receiving power in relation to an external power source device, a first charging circuit connected to a first battery, a second charging circuit connected to a second battery, a power management module including a first port connected to the power pin, a second port connected to the first battery and a connection node of the first charging circuit, and a third port connected to a system power line, and a first switch for selectively connecting the second charging circuit to the first port or the third port.

An electronic device according to an embodiment may include a connector including a power pin for supplying or receiving power in relation to an external power source device, a first charging circuit connected to a first battery, a second charging circuit connected to a second battery, a power management module including a first port connected to the power pin, a second port connected to the first charging circuit and a connection node of the second charging circuit, and a third port connected to a system power line, a first switch for selectively connecting the first charging circuit to the first port or the second port, and a second switch for selectively connecting the second charging circuit to the first port or the second port.

An electronic device according to an embodiment may include a connector including a power pin for supplying or receiving power in relation to an external power source device, a first charging circuit connected to a first battery, a limiter connected to a second battery that has a parallel relationship with the first battery, and a power management module including a first port connected to the power pin, a second port connected to the first battery and a connection node of the limiter, and a third port connected to a system power line, wherein the charging circuit includes a controller configured to control the limiter.

### BRIEF DESCRIPTION OF DRAWINGS

FIG. 1 is a block diagram illustrating an electronic device in a network environment according to an embodiment.
FIG. 2 is a block diagram of a power management module and a battery according to an embodiment.
FIG. 3 is an example of a charging environment of an electronic device according to an embodiment.
FIG. 4 is a block diagram illustrating an electronic device according to an embodiment.
FIGS. 5A and 5B are diagrams illustrating charging and discharging paths of an electronic device according to an embodiment.
FIG. 6 is a block diagram illustrating an electronic device according to an embodiment.
FIGS. 7A and 7B are diagrams illustrating charging and discharging paths of an electronic device according to an embodiment.
FIG. 8 is a block diagram illustrating an electronic device according to an embodiment.
FIGS. 9A and 9B are diagrams illustrating charging and discharging paths of an electronic device according to an embodiment.
FIG. 10 is a block diagram illustrating an electronic device according to an embodiment.
FIGS. 11A and 11B are diagrams illustrating charging and discharging paths of an electronic device according to an embodiment.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

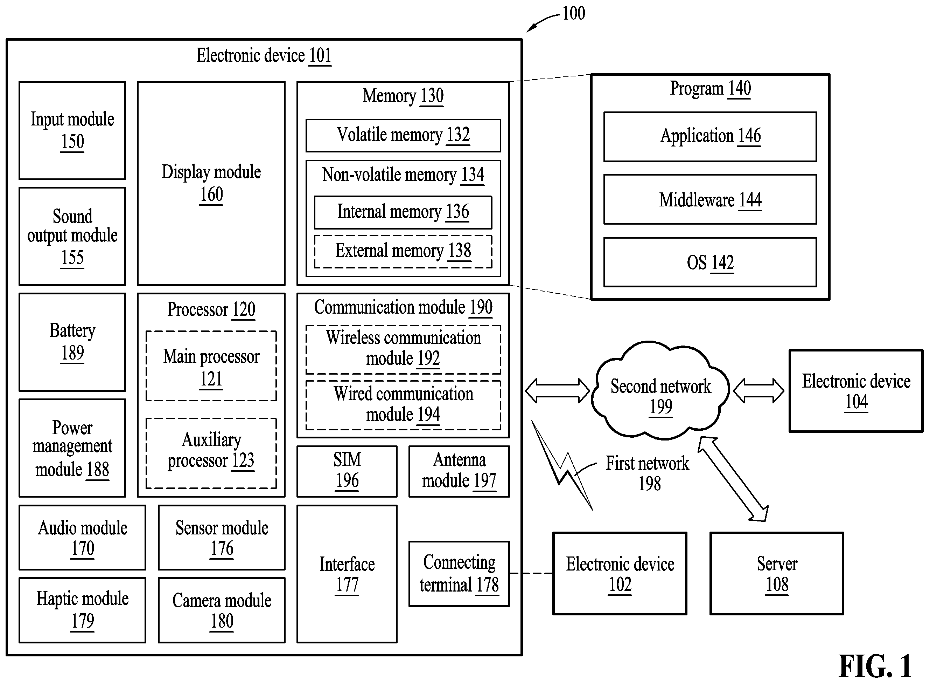

FIG . 1 is a block diagram illustrating an electronic device 101 in a network environment 100 according to various embodiments. Referring to FIG. 1, an electronic device 101 in the network environment 100 may communicate with an electronic device 102 via a first network 198 (e.g., a short-range wireless communication network), or communicate with an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120 and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

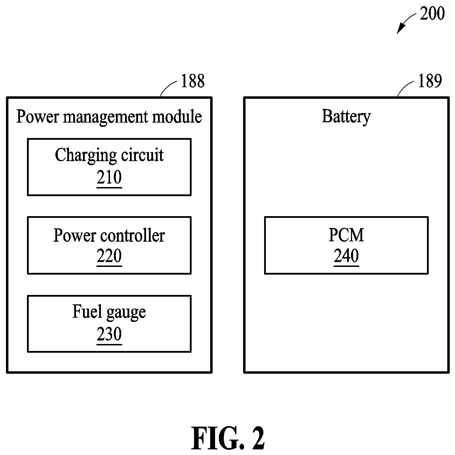

According to an embodiment, the processor 120 may be implemented as circuitry (e.g., processing circuitry), such as system on chip (SoC) or an integrated circuit (IC). The processor 120 may include one or more processors. For example, the processor 120 may include a combination of one or more processors, such as a CPU, a GPU, a microprocessor unit (MPU), an AP, and a CP. Instructions stored in the memory 130 may be executed by one processor to cause the electronic device 101 to perform and/or control operations of the electronic device 101 to be described with reference to FIGS. 2 to 11B. The instructions stored in the memory 130 may be executed by a plurality of processors to cause the electronic device 101 to perform and/or control operations of the electronic device 101 to be described with reference to FIGS. 2 to 11B.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The processor 130 may include one or more processors. The instructions stored in the memory 130 may be stored in one memory. The instructions stored in the memory 130 may be divided and stored in a plurality of memories. The instructions stored in the memory 130 may be executed by the processor 120 to cause the electronic device 101 to perform and/or control operations of the electronic device 101 to be described with reference to FIGS. 2 to 11B.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to sense a touch, or a pressure sensor adapted to measure an intensity of a force incurred by the touch. The display module 160 may be implemented with, for example, a foldable structure and/or a rollable structure. For example, a size of a display screen of the display module 160 may be reduced when folded and expanded when unfolded.

The audio module 170 may convert a sound into an electrical signal and vice versa. According to an embodiment, the audio module 170 may obtain the sound via the input module 150 or output the sound via the sound output module 155 or an external electronic device (e.g., an electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed by the electronic device 101 may be executed by one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

FIG. 2 is a block diagram 200 of a power management module and a battery according to various embodiments.

Referring to FIG. 2, the power management module 188 may include charging circuitry 210, a power controller 220, or a fuel gauge 230. The charging circuitry 210 may charge the battery 189 using power supplied from an external power source outside the electronic device 101. According to an embodiment, the charging circuitry 210 may select a charging scheme (e.g., normal charging or quick charging) based on at least a portion of a type of the external power source (e.g., a power adapter, USB or wireless charging), the magnitude of power that may be supplied from the external power source (e.g., about 20 Watts or more), or an attribute of the battery 189 and may charge the battery 189 using the selected charging scheme. The external power supply may be connected to the electronic device 101, for example, wiredly via the connecting terminal 178 or wirelessly via the antenna module 197.

For example, the power controller 220 may generate pieces of power having different voltage levels or different current levels by controlling a voltage level or a current level of the power supplied from the external power source or the battery 189. The power controller 220 may control the power from the external power source or the battery 189 to an appropriate voltage level or current level for each of some of the components included in the electronic device 101. According to an embodiment, the power controller 220 may be implemented as a low dropout (LDO) regulator or a switching regulator. The fuel gauge 230 may measure usage state information (e.g., the capacity, charging or discharging count, voltage, or the temperature of the battery 189) about the battery 189.

The power management module 188 may determine, using, for example, the charging circuitry 210, the power controller 220, or the fuel gauge 230, charging state information (e.g., a lifetime, overvoltage, low voltage, overcurrent, over charge, over discharge, overheat, short, or swelling) related to the charging of the battery 189 based on at least a portion of the measured usage state information. The power management module 188 may determine whether the battery 189 is normal or abnormal based on at least a portion of the determined charging state information. When a state of the battery 189 is determined to be abnormal, the power management module 188 may control the charging (e.g., reduce a charging current or voltage or stop charging) of the battery 189. According to an embodiment, at least some of the functions of the power management module 188 may be performed by an external control device (e.g., the processor 120).

According to an embodiment, the battery 189 may include a protection circuit module (PCM) 240. The PCM 240 may perform one or more of various functions (e.g., a pre-cutoff function) to prevent damage or performance degradation of the battery 189. Additionally or alternatively, the PCM 240 may be configured as at least a part of a battery management system (BMS) for performing various functions including cell balancing, measuring the battery capacity, measuring a count of charging or discharging, measuring the temperature, or measuring the voltage.

According to an embodiment, at least a portion of the usage state information or the charging state information about the battery 189 may be measured using a corresponding sensor (e.g., a temperature sensor) of the sensor module 176, the fuel gauge 230, or the power management module 188. According to an embodiment, the corresponding sensor (e.g., the temperature sensor) of the sensor module 176 may be included as a part of the PCM 240 or may be disposed adjacent to the battery 189 as a separate device.

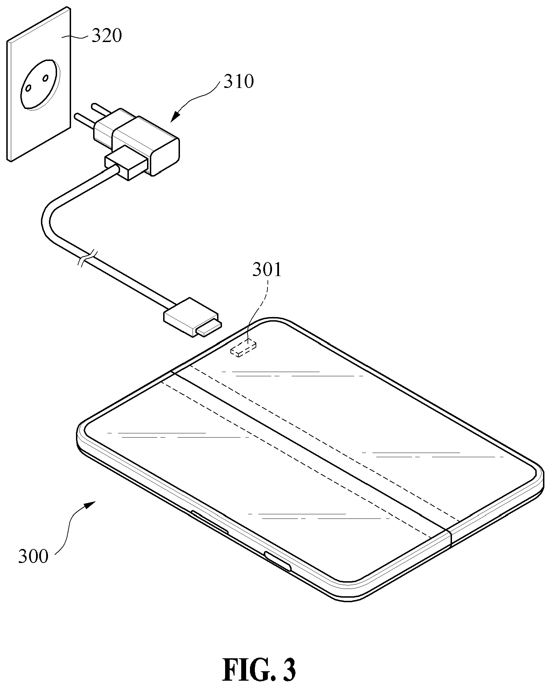

FIG. 3 is an example of a charging environment of an electronic device according to an embodiment.

Referring to FIG. 3, the charging environment may include a power source device (e.g., a travel adapter (TA)) 310 and an electronic device 300 (e.g., the electronic device 101 of FIG. 1).

According to an embodiment, the electronic device 300 may include, for example, a smartphone, a smartwatch, smartglasses, or a laptop, but the example is not limited thereto. The smartglasses may provide virtual reality (VR), augmented reality (AR), or mixed reality (MR) to a user through a display.

According to an embodiment, the power supply device 310 may support USB power delivery (PD). Without being limited thereto, the power supply device 310 may support USB PD and programmable power supply (PPS).

According to an embodiment, the electronic device 300 may include a connecting terminal 301 (e.g., the connecting terminal 178 of FIG. 1). In an embodiment, a side of a cable of the power supply device 310 may be inserted into the connecting terminal 301. The connecting terminal 301 may include, for example, a USB type-C connector, but the example is not limited thereto. The electronic device 300 may distinguish the type of the power source device 310 connected via the connecting terminal 301. For example, the electronic device 300 may distinguish the type (e.g., the type of the power source device based on whether PPS is supported) of the power source device 310 connected to the electronic device 300 via a multiplexer (MUX) IC and/or a communication and control for power delivery (CCPD) IC.

According to an embodiment, the power source device 310 may be electrically connected to a power source 320 and may deliver or supply the power supplied from the power source 320 to the electronic device 300. In an embodiment, the power source device 310 may convert alternating current (AC) power into direct current (DC) power by receiving the AC power from the power source 320 and may deliver or supply the converted DC power to the electronic device 300.

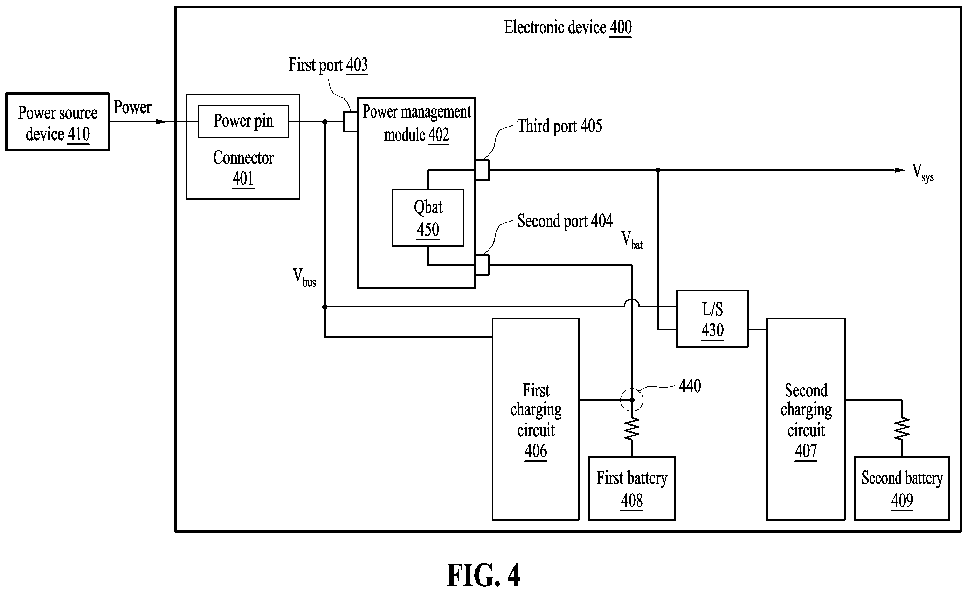

FIG. 4 is a block diagram illustrating an electronic device according to an embodiment.

Referring to FIG. 4, according to an embodiment, an electronic device 400 (e.g., the electronic device 101 of FIG. 1 or the electronic device 300 of FIG. 3) may be a dual-role-power (DRP) device. The DRP device may indicate a device that may operate as a source for supplying power or as a sink for receiving power from a source. In the example illustrated in FIG. 4, a power source device 410 (e.g., the power source device 310 of FIG. 3) may operate as a source, and the electronic device 400 may operate as a sink.

According to an embodiment, the electronic device 400 may include a connector 401 (e.g., the connecting terminal 178 of FIG. 1 or the connecting terminal 301 of FIG. 3), a power management module 402 (e.g., the power management module 188 of FIG. 1), a first battery 408 (e.g., the battery 189 of FIG. 1), a second battery 409 (e.g., the battery 189 of FIG. 1), a first charging circuit 406, a second charging circuit 407, and a switch 430. At least one of components of the electronic device 400 may be the same as or similar to at least one of the components of the electronic device 101 of FIG. 1, and a repeated description thereof is omitted.

According to an embodiment, the connector 401 may be connected to a cable of the power source device 410. The connector 401 may include a plurality of pins. The connector 401 may include one or more VBUS pins used for receiving power from the power source device 410, one or more communication pins used to perform communication between the electronic device 400 and the power source device 410, one or more ground pins, and a power pin for supplying power to the power source device 410 or receiving power from the power source device 410. The one or more communication pins may include, for example, a configuration channel (CC) pin, a D+ pin, and a D- pin. The connector 401 may receive power from the power source device 410 via one or more VBUS pins.

According to an embodiment, the power source device 410 may include a legacy TA (e.g., an external power source device of a first type) that does not support a PPS function and a PPS TA (e.g., an external power source device of a second type) that supports the PPS function.

According to an embodiment, the power management module 402 may manage power supplied to the electronic device 400. For example, the power management module 402 may be implemented as a part of an interface-PMIC (IF-PMIC). The IF-PMIC may be an IC that further includes an additional function in addition to a typical PMIC. The power management module 402 may include a first port 403 connected to the power pin, a second port 404 connected to the first battery 408 and a connection node 440 of the first charging circuit 406, a third port 405 connected to a system power line, and a Qbat 450 that is a battery management module. The Qbat 450 may control charging and discharging processes of a battery (e.g., the first battery 408 and the second battery 409).

According to an embodiment, the first battery 408 and the second battery 409 may be connected in parallel. The first battery 408 and the second battery 409 may each be implemented as the battery 189 described with reference to FIGS. 1 and 2. For example, the first battery 408 and the second battery 409 may be implemented as the same two batteries 189. The first battery 408 and the second battery 409 may be a main battery used as a main power source of the electronic device 400 and a sub-battery used as a backup power source, respectively, but the example is not limited thereto. According to an embodiment, the first charging circuit 406 and the second charging circuit 407 may include a direct charger (DC) IC. The DC IC may be a charger for fast-charging a battery (e.g., the first battery 408 and the second battery 409).

According to an embodiment, the electronic device 400 may include the first switch 430 for selectively connecting the second charging circuit 407 to the first port 404 or the third port 405. The first switch 430 may be implemented as a load switch. The first switch 430 may connect the second charging circuit 407 to the first port 404 or the third port 405 according to the type (e.g., the external power source device of the first type or the external power source device of the second type) of the power source device 410 connected to the electronic device 400. The first switch 430 may be controlled by a processor (not illustrated) (e.g., the processor 120 of FIG. 1) of the electronic device 400 and/or the power management module 402 but is not necessarily limited thereto. Depending on the embodiment, the first switch 430 may be controlled by a separate controller (not illustrated) (e.g., a switch controller).

According to an embodiment, the first charging circuit 406 and the second charging circuit 407 may operate in a charging pump (e.g., 2:1 charging pump) mode, a forward mode, and a reverse mode. The charging pump mode may indicate a mode in which, for example, in the case of an n:1 charging pump, a battery (e.g., the first battery 408 and the second battery 409) is charged by multiplying a voltage by 1/n and multiplying a current by n. The forward mode may be, for example, a mode for simply outputting a supply current received from the power source device 410 without converting or regulating the supply current. The reverse mode may be a mode in which power flows from an output (e.g., the second battery 409) to an input. According to an embodiment, when there is no external power source device connected to the connector 401 of the electronic device 400, the second charging circuit 407 may operate in a 1:1 reverse mode.

According to an embodiment, when the first charging circuit 406 and the second charging circuit 407 charge a dead battery (e.g., including a case in which a processor (not illustrated) of the electronic device 400 is not driven) and perform current limiting, a current that serves as reference for current limiting may be set to a specific unit (e.g., 50 milliampere (mA)). For example, a reference current for current limiting may be set to 50 mA, 100 mA, 150 mA, and 200 mA.

According to an embodiment, in the case of a ship mode for preventing discharging of a battery (e.g., the first battery 408 and the second battery 409), when charging disable is activated in the first charging circuit 406, the second charging circuit 407, and a transistor (e.g., a field effect transistor (FET)) included in the Qbat 450 that is the battery management module in the power management module 402, power paths (e.g., a charging path and a discharging path) of the first battery 408 and the second battery 409 may be open.

According to an embodiment, in a process mode in which a battery (e.g., the first battery 408 and the second battery 409) is used in a manufacturing process and/or a production and management process, disconnection of each battery (e.g., the first battery 408 and the second battery 409) may be performed. The disconnection of the first battery 408 may be performed, for example, through a DISQBAT operation of the Qbat 450. The disconnection of the second battery 409 may be performed by, for example, turning off the first switch 430.

When the electronic device 400 according to an embodiment operates in an LDO mode, the electronic device 400 may operate by using the Qbat 450 in the LDO mode and using a function (e.g., an IBUS_REG function) of the first charging circuit 406 and/or the second charging circuit 407. The LDO may refer to a case in which a potential difference between an input voltage and an output voltage is significantly small.

The electronic device 400 according to an embodiment may use a charging circuit (e.g., the second charging circuit 407) of the Qbat 450 to perform overcurrent protection (OCP) during discharging. For example, when the first battery 408 is discharged, the electronic device 400 may perform OCP on the first battery 408 via the Qbat 450, and when the second battery 409 is discharged, the electronic device 400 may perform OCP on the second battery 409 using a function (e.g., iBUS_OCP) of the second charging circuit 407.

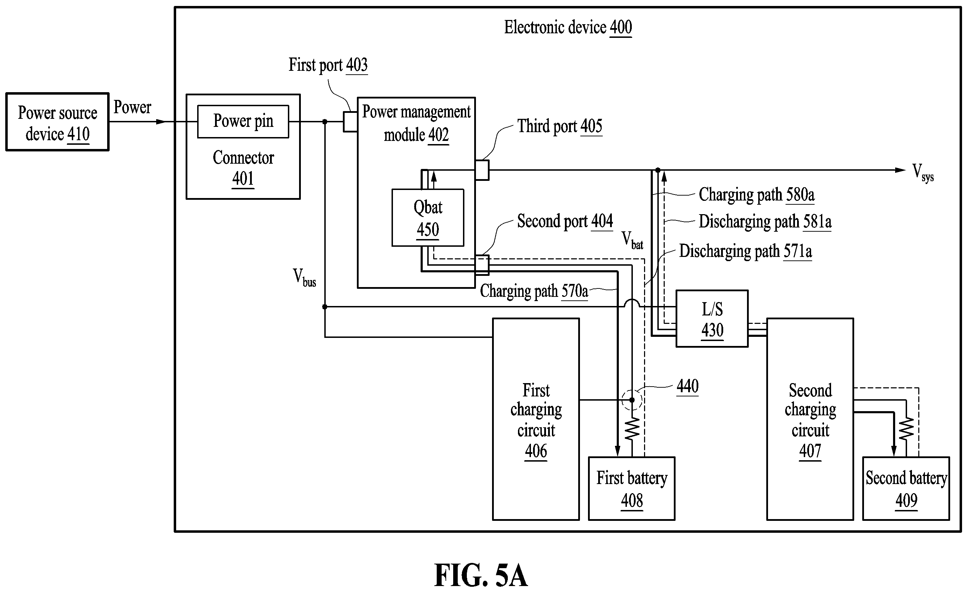

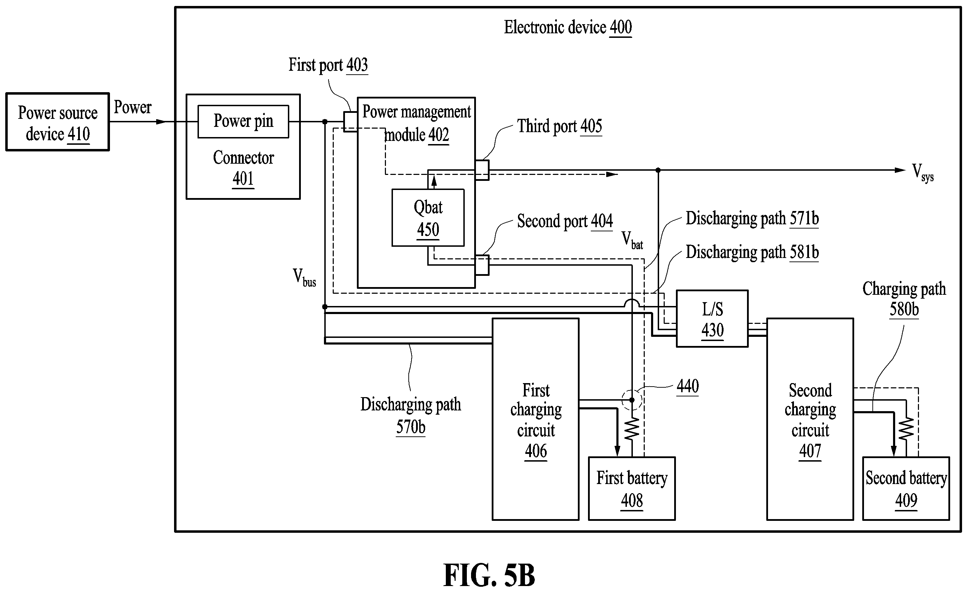

FIGS. 5A and 5B are diagrams illustrating charging and discharging paths of an electronic device according to an embodiment.

FIG. 5A is a diagram illustrating an operation of the electronic device 400 when an external power source device of the first type (hereinafter, also referred to as a "legacy TA") that does not support PPS is connected to the connector 401 of the electronic device 400 of FIG. 4.

Referring to FIG. 5A, according to an embodiment, the power source device 410 (e.g., the legacy TA) may be connected to the connector 401 via a cable to supply power to the electronic device 400. A charging path 570a may illustrate a path through which the first battery 408 is charged, and a charging path 580a may illustrate a path through which the second battery 409 is charged.

According to an embodiment, the charging path 570a may indicate a path through which the first battery 408 is charged. The first battery 408 may be charged by, for example, receiving power from a system power line via the Qbat 450.

According to an embodiment, the charging path 580a may indicate a path through which the second battery is charged. The second battery may be charged by, for example, receiving power from the system power line via the second charging circuit 407. The first switch 430 may connect the third port 405 to the second charging circuit 407 to allow the second battery 409 to be charged by receiving power from the system power line. The first switch 430 may be controlled by a processor (not illustrated) (e.g., the processor 120 of FIG. 1) of the electronic device 400 and/or the power management module 402 but is not necessarily limited thereto. Depending on the embodiment, the first switch 430 may be controlled by a separate controller (not illustrated) (e.g., a switch controller). For example, the second charging circuit 407 may charge the second battery 409 by operating in a 1:1 forward mode.

When a legacy TA (e.g., the power source device 410) supplies power to the electronic device 400, current limiting may be required for safe charging and battery protection to prevent a current exceeding an allowed current from being supplied to a battery (e.g., the first battery 408 and the second battery 409). The current limiting for each battery (e.g., the first battery 408 and the second battery 409) may be performed via an element included in a charging path (e.g., the charging path 570a and the charging path 580a) of each battery.

According to an embodiment, current limiting for the first battery 408 may be performed via the Qbat 450 that is the battery management module included in the power management module 402. For example, current limiting may be performed on the first battery 408 as an FET included in the Qbat 450 serves to perform current limiting other than functions (e.g., V_{sys} short detection, IBAT loop, a ship mode, etc.) performed by the Qbat 450.

According to an embodiment, current limiting for the second battery 409 may be performed by a transistor (e.g., an input FET (INFET)) included in the second charging circuit 407. The INFET may refer to an FET positioned at an input terminal of the second charging circuit 407. The INFET may perform current regulation by controlling a value of drain-source resistance (R_{ds}) by controlling a gate voltage.

According to an embodiment, when current limiting is performed on the second battery 409 via the INFET of the second charging circuit 407, a function of the second charging circuit 407 may be activated or deactivated to perform the current limiting on the second battery 409. For example, current limiting may be performed on the second battery 409 by deactivating an under current protection (UCP) function to prevent current reduction of the second charging circuit 407 or selectively using a function of the second charging circuit 407 based on a charging section (e.g., a constant current (CC) section or a constant voltage (CV) section).

According to an embodiment, when the legacy TA (e.g., the power source device 410) is connected to the connector 401, the power management module 402 may perform a buck-on operation and a charge-on operation. The buck-on operation may be an operation to supply power to a system via the third port 405. The charge-on operation may be an operation to supply power to a battery (e.g., the first battery 408 and the second battery 409) via the second port 404.

According to an embodiment, even when the electronic device 400 is connected to the power source device 410 (e.g., the legacy TA), for example, if the electronic device 400 consumes power due to heavy load, the electronic device 400 may receive power from a battery (e.g., the first battery 408 and the second battery 409).

According to an embodiment, a discharging path 571a may indicate a path through which the first battery 408 is discharged. For example, the first battery 408 may supply power to the system via the Qbat 450 and may be discharged. A discharging path 581a may indicate a path through which the second battery 409 is discharged, and for example, the second battery 409 may directly supply power to the system via the second charging circuit 407 and may be discharged.

FIG. 5B is a diagram illustrating an operation of the electronic device 400 when an external power source device of the second type (hereinafter, also referred to as a "PPS TA") that supports PPS is connected to the connector 401 of the electronic device 400 of FIG. 4.

Referring to FIG. 5B, according to an embodiment, the power source device 410 (e.g., the PPS TA) may be connected to the connector 401 via a cable to supply power to the electronic device 400. A charging path 570b may illustrate a path through which the first battery 408 is charged, and a charging path 580b may illustrate a path through which the second battery 409 is charged.

According to an embodiment, when the PPS TA is connected to the connector 401 and the electronic device 400 receives power, the first charging circuit 406 and the second charging circuit 407 may operate as n:1 charging pumps in which a voltage is multiplied by 1/n and a current is multiplied by n, thereby fast-charging a battery (e.g., the first battery 408 and the second battery 409). The first charging circuit 406 may be connected to the first battery 408 to charge the first battery 408, and the second charging circuit 407 may be connected to the second battery 409 to charge the second battery 409.

According to an embodiment, the charging path 570b may indicate a path through which the first battery 408 is charged. The first battery 408 may be charged by receiving power from the power source device 410 (e.g., the PPS TA) via the first charging circuit 406 from the connector 401.

According to an embodiment, the charging path 580b may indicate a path through which the second battery 409 is charged. The second battery 409 may be charged by receiving power from the power source device 410 via the second charging circuit 407 from the connector 401. When the PPS TA is connected to the connector 401, the first switch 430 may connect the first port 403 to the second charging circuit 407. The first charging circuit 406 and the second charging circuit 407 may operate as n:1 charging pumps (e.g., n is a natural number greater than or equal to 2) to charge the first battery 408 and the second battery 409, respectively.

According to an embodiment, when the PPS TA (e.g., the power source device 410) is connected to the connector 401, the power management module 402 may perform a buck-on operation to supply power to the system via the third port 405.

According to an embodiment, a discharging path 571b may indicate a path through which the first battery 408 is discharged. For example, the first battery 408 may supply power to the system via the Qbat 450 and may be discharged. The discharging path 571b may be substantially the same as the discharging path 571a described with reference to FIG. 5A.

According to an embodiment, the discharging path 581b may indicate a path through which the second battery 409 is discharged, and for example, the second battery 409 may be discharged to a system power line through the power management module 402 via the first switch 430 through the second charging circuit 407 to supply power to the system. The discharging path 581b may include a path to supply power to the system via the third port 405 after passing through the power management module 402 via the first port 403.

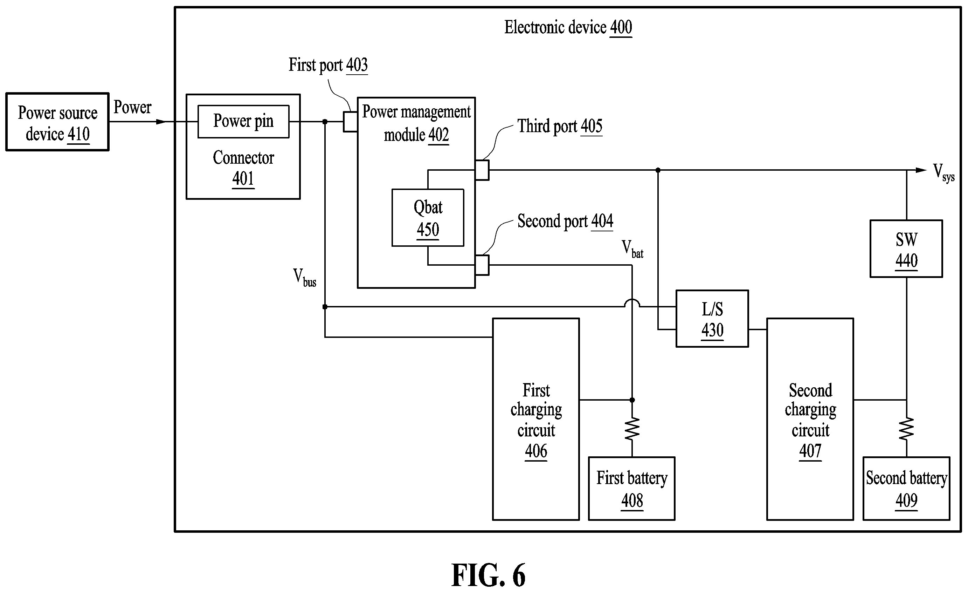

FIG. 6 is a block diagram illustrating an electronic device according to an embodiment.

Referring to FIG. 6, according to an embodiment, FIG. 6 is a diagram illustrating an embodiment in which the electronic device 400 described with reference to FIG. 4 further includes a second switch 440.

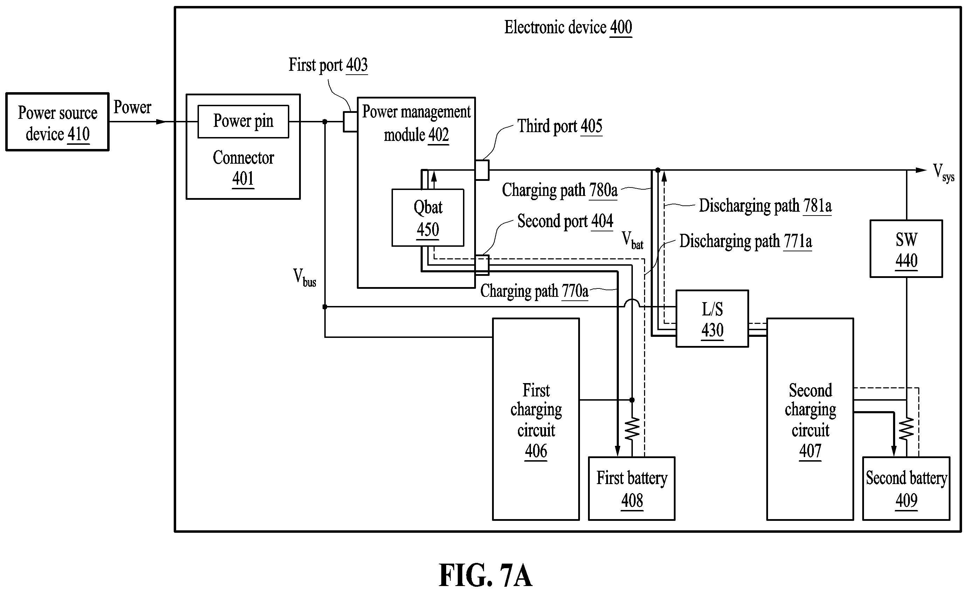

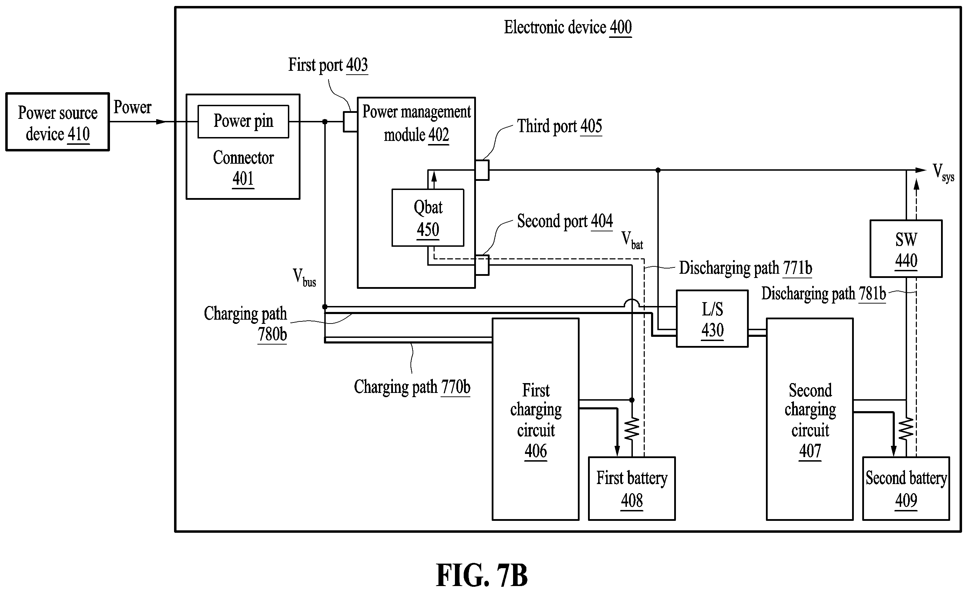

According to an embodiment, the electronic device 400 may further include the second switch 440 to selectively connect the second battery 409 to the third port 405. The second switch 440 may be for, for example, blocking or allowing power flow via a switching function and may be implemented as a switch element. The second switch 440 may be turned on or off based on whether the power source device 410 connected to the connector 401 supports PPS, thereby selectively connecting the second battery 409 to the system power line. An operation of the second switch 440 according to the type of the power source device 410 is described with reference to FIGS. 7A and 7B.

FIGS. 7A and 7B are diagrams illustrating charging and discharging paths of an electronic device according to an embodiment.

FIG. 7A is a diagram illustrating an operation of the electronic device 400 when an external power source device of the first type (hereinafter, also referred to as a "legacy TA") that does not support PPS is connected to the connector 401 of the electronic device 400 of FIG. 6.

Referring to FIG. 7A, according to an embodiment, the power source device 410 (e.g., the legacy TA) may be connected to the connector 401 via a cable to supply power to the electronic device 400. A charging path 770a may illustrate a path through which the first battery 408 is charged, and a charging path 780a may illustrate a path through which the second battery 409 is charged.

According to an embodiment, the charging path 770a may indicate a path through which the first battery 408 is charged. The first battery 408 may be charged by, for example, receiving power from a system power line via the Qbat 450. The charging path 770a may be substantially the same as the charging path 570a of the first battery described with reference to FIG. 5A.

According to an embodiment, the charging path 780a may indicate a path through which the second battery is charged. The second battery may be charged by, for example, receiving power from the system power line via the second charging circuit 407. The first switch 43 may connect the third port 405 to the second charging circuit 407 to allow the second battery 409 to be charged by receiving power from the system power line. The charging path 780a may be substantially the same as the charging path 580a of the second battery described with reference to FIG. 5A. When the legacy TA is connected to the connector 401, the second switch 440 may be turned off to block current between the second battery 409 and the system power line. The second switch 440 may be controlled by a processor (not illustrated) (e.g., the processor 120 of FIG. 1) of the electronic device 400 and/or the power management module 402 but is not necessarily limited thereto. Depending on the embodiment, the second switch 440 may be controlled by a separate controller (not illustrated) (e.g., a switch controller).

When a legacy TA (e.g., the power source device 410) supplies power to the electronic device 400, current limiting may be required for safe charging and battery protection to prevent a current exceeding an allowed current from being supplied to a battery (e.g., the first battery 408 and the second battery 409). Since current limiting for each battery (e.g., the first battery 408 and the second battery 409) is the same as the current limiting operation for the first battery 408 and the second battery 409 described with reference to FIG. 5A, a detailed description thereof is omitted.

According to an embodiment, even when the electronic device 400 is connected to the power source device 410 (e.g., the legacy TA), for example, if the electronic device 400 consumes power due to heavy load, the electronic device 400 may receive power from a battery (e.g., the first battery 408 and the second battery 409).

According to an embodiment, a discharging path 771a may indicate a path through which the first battery 408 is discharged. For example, the first battery 408 may supply power to the system via the Qbat 450 and may be discharged. The discharging path 771a may be substantially the same as the discharging path 571a of the first battery 408 described with reference to FIG. 5A.

According to an embodiment, a discharging path 781a may indicate a path through which the second battery 409 is discharged, and for example, the second battery 409 may directly supply power to the system via the second charging circuit 407 and may be discharged. The discharging path 781a may be substantially the same as the discharging path 581a of the second battery 409 described with reference to FIG. 5A.

FIG. 7B is a diagram illustrating an operation of the electronic device 400 when an external power source device of the second type (hereinafter, also referred to as a "PPS TA") that supports PPS is connected to the connector 401 of the electronic device 400 of FIG. 6.

Referring to FIG. 7B, according to an embodiment, the power source device 410 (e.g., the PPS TA) may be connected to the connector 401 via a cable to supply power to the electronic device 400. A charging path 770b may illustrate a path through which the first battery 408 is charged, and a charging path 780b may illustrate a path through which the second battery 409 is charged.

According to an embodiment, when the PPS TA is connected to the connector 401 and the electronic device 400 receives power, the first charging circuit 406 and the second charging circuit 407 may operate as n:1 charging pumps in which a voltage is multiplied by 1/n and a current is multiplied by n, thereby fast-charging a battery (e.g., the first battery 408 and the second battery 409). The first charging circuit 406 may be connected to the first battery 408 to charge the first battery 408, and the second charging circuit 407 may be connected to the second battery 409 to charge the second battery 409.

According to an embodiment, the charging path 770b may indicate a path through which the first battery 408 is charged. The first battery 408 may be charged by receiving power from the power source device 410 (e.g., the PPS TA) via the first charging circuit 406 from the connector 401. The charging path 770b may be substantially the same as the charging path 570b of the first battery 408 described with reference to FIG. 5B.

According to an embodiment, the charging path 580b may indicate a path through which the second battery 409 is charged. The second battery 409 may be charged by receiving power from the power source device 410 via the second charging circuit 407 from the connector 401. When the PPS TA is connected to the connector 401, the first switch 430 may connect the first port 403 to the second charging circuit 407. The first charging circuit 406 and the second charging circuit 407 may operate as n:1 charging pumps (e.g., n is a natural number greater than or equal to 2) to charge the first battery 408 and the second battery 409, respectively. The charging path 780b may be substantially the same as the charging path 580b of the first battery 408 described with reference to FIG. 5B.

According to an embodiment, when the PPS TA (e.g., the power source device 410) is connected to the connector 401, the power management module 402 may perform a buck-on operation to supply power to the system via the third port 405.

According to an embodiment, a discharging path 771b may indicate a path through which the first battery 408 is discharged. For example, the first battery 408 may supply power to the system via the Qbat 450 and may be discharged. The discharging path 571b may be substantially the same as the discharging path 571a described with reference to FIG. 5A.

According to an embodiment, a discharging path 581b may indicate a path through which the second battery 409 is discharged. When the PPS TA is connected to the connector 401, the second switch 440 may be turned on to allow current between the second battery 409 and the system power line. The second battery 409 may supply power to the system via the second switch 440, and the discharging path 781b may be shorter than the discharging path 581b of the second battery 409 described with reference to FIG. 5B.

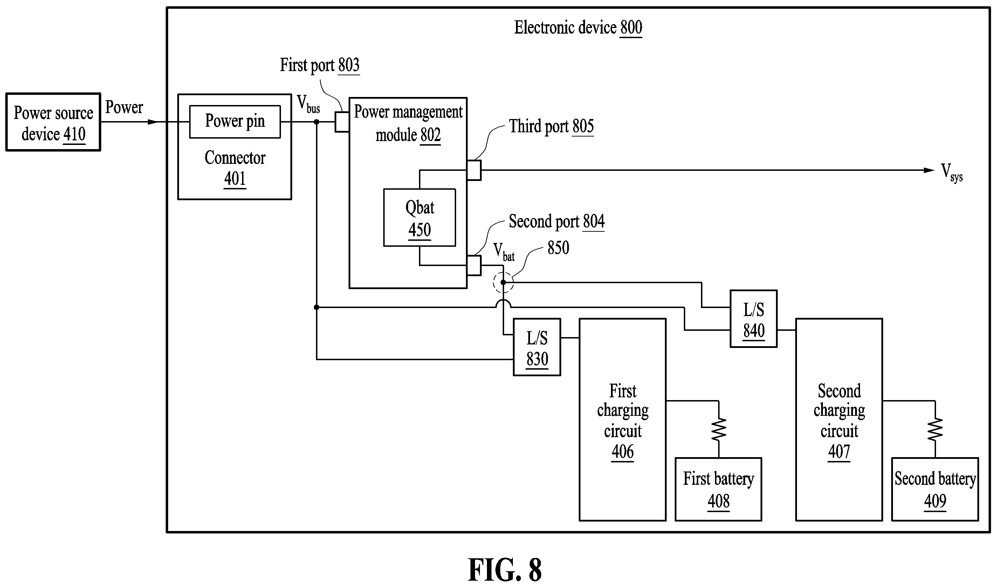

FIG. 8 is a block diagram illustrating an electronic device according to an embodiment.

Referring to FIG. 8, according to an embodiment, an electronic device 800 (e.g., the electronic device 101 of FIG. 1 or the electronic device 300 of FIG. 3) may be a DRP device. The DRP device may indicate a device that may operate as a source for supplying power or as a sink for receiving power from a source. In the example illustrated in FIG. 8, a power source device 410 (e.g., the power source device 310 of FIG. 3) may operate as a source, and the electronic device 800 may operate as a sink.

According to an embodiment, the electronic device 800 may include the connector 401 (e.g., the connecting terminal 178 of FIG. 1 or the connecting terminal 301 of FIG. 3), a power management module 802 (e.g., the power management module 188 of FIG. 1), the first battery 408 (e.g., the battery 189 of FIG. 1), the second battery 409 (e.g., the battery 189 of FIG. 1), the first charging circuit 406, the second charging circuit 407, a first switch 830, and a second switch 840. At least one of components of the electronic device 800 may be the same as or similar to at least one of the components of the electronic device 101 of FIG. 1, and a repeated description thereof is omitted.

According to an embodiment, the connector 401 may be connected to a cable of the power source device 410. The connector 401 may include a plurality of pins. The connector 401 may include one or more VBUS pins used for receiving power from the power source device 410, one or more communication pins used to perform communication between the electronic device 800 and the power source device 410, one or more ground pins, and a power pin for supplying power to the power source device 410 or receiving power from the power source device 410. The one or more communication pins may include, for example, a CC pin, a D+ pin, and a D- pin. The connector 401 may receive power from the power source device 410 via one or more VBUS pins.

According to an embodiment, the power source device 410 may include a legacy TA (e.g., an external power source device of the first type) that does not support a PPS function and a PPS TA (e.g., an external power source device of the second type) that supports the PPS function.

According to an embodiment, the power management module 802 may manage power supplied to the electronic device 400. For example, the power management module 402 may be implemented as a part of an IF-PMIC. The IF-PMIC may be an IC that further includes an additional function in addition to a typical PMIC. The power management module 802 may include a first port 803 connected to the power pin, a second port 804 connected to the first charging circuit 406 and a connection node 850 of the second charging circuit 407, a third port 805 connected to a system power line, and the Qbat 450 that is a battery management module. The Qbat 450 may control charging and discharging processes of a battery (e.g., the first battery 408 and the second battery 409).

According to an embodiment, the first battery 408 and the second battery 409 may be connected in parallel. The first battery 408 and the second battery 409 may each be implemented as the battery 189 described with reference to FIGS. 1 and 2. For example, the first battery 408 and the second battery 409 may be implemented as the same two batteries 189.

According to an embodiment, the first battery 408 and the second battery 409 may be a main battery used as a main power source of the electronic device 400 and a sub-battery used as a backup power source, respectively, but the example is not limited thereto.

According to an embodiment, the first charging circuit 406 and the second charging circuit 407 may include a DC IC. The DC IC may be a charger for fast-charging a battery (e.g., the first battery 408 and the second battery 409).

According to an embodiment, the electronic device 800 may include the first switch 830 for selectively connecting the first charging circuit 406 to the first port 803 or the second port 804. The first switch 830 may be implemented as a load switch. The first switch 830 may selectively connect the second charging circuit 407 to the first port 803 or the second port 804 according to the type (e.g., the external power source device of the first type or the external power source device of the second type) of the power source device 410 connected to the electronic device 800.

According to an embodiment, the electronic device 800 may include the second switch 840 for selectively connecting the second charging circuit 407 to the first port 803 or the second port 804. The second switch 840 may be implemented as a load switch. The second switch 840 may selectively connect the second charging circuit 407 to the first port 803 or the second port 804 according to the type (e.g., the external power source device of the first type or the external power source device of the second type) of the power source device 410 connected to the electronic device 800. The first switch 830 and the second switch 840 may be controlled by a processor (not illustrated) (e.g., the processor 120 of FIG. 1) of the electronic device 800 and/or the power management module 402, but the example is not limited thereto. Depending on the embodiment, the first switch 830 and the second switch 840 may be controlled by a separate controller (not illustrated) (e.g., a switch controller).

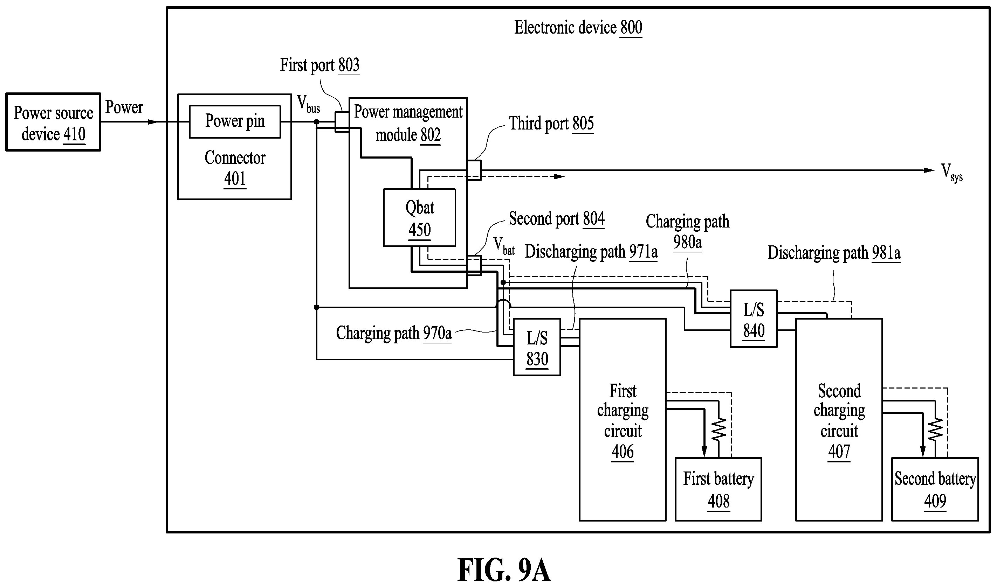

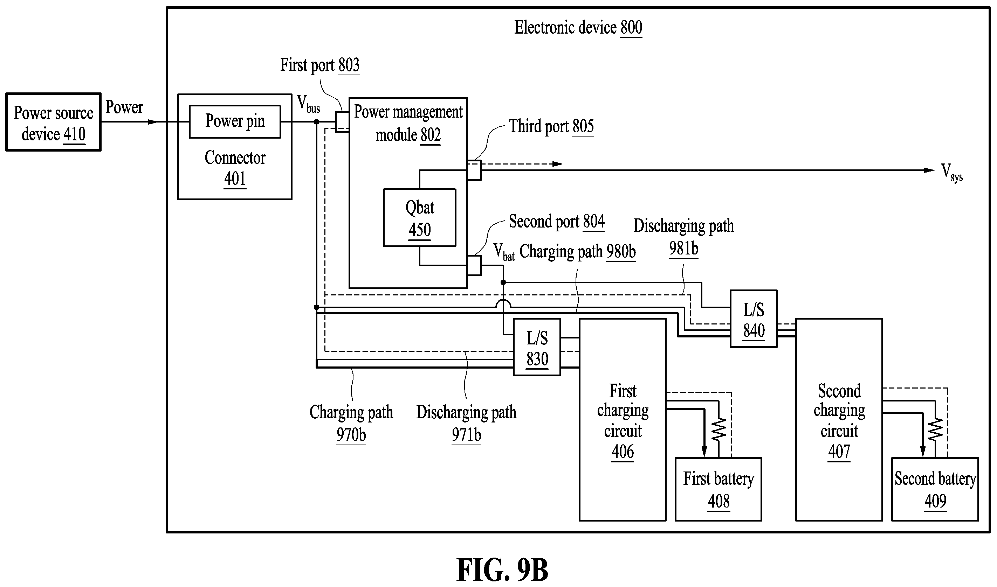

FIGS. 9A and 9B are diagrams illustrating charging and discharging paths of an electronic device according to an embodiment.

FIG. 9A is a diagram illustrating an operation of the electronic device 800 when an external power source device of the first type (hereinafter, also referred to as a "legacy TA") that does not support PPS is connected to the connector 401 of the electronic device 800 of FIG. 8.

Referring to FIG. 9A, according to an embodiment, the power source device 410 (e.g., the legacy TA) may be connected to the connector 401 via a cable to supply power to the electronic device 800. A charging path 970a may illustrate a path through which the first battery 408 is charged, and a charging path 980a may illustrate a path through which the second battery 409 is charged.

According to an embodiment, the charging path 970a may indicate a path through which the first battery 408 is charged. When the legacy TA is connected to the connector 401, the first switch 830 may connect the first charging circuit 406 to the second port 804. For example, the charging path 970a may be a path for supplying power to the first battery 408 through the Qbat 450 via the first port 803 from the connector 401 and then through the first switch 830 and the first charging circuit 406 via the second port 804.

According to an embodiment, the charging path 980a may indicate a path through which the second battery is charged. When the legacy TA is connected to the connector 401, the second switch 840 may connect the second charging circuit 407 to the second port 804. The charging path 980a may be a path for supplying power to the second battery 409, wherein the charging path 980a shares a path from the charging path 570a to the second port 804, and from the second port 804, the path may be divided. The charging path 980a may be a path for supplying power to the second battery 409, wherein the path is divided from the charging path 970a after the second port 804 and passes through the second switch 840 and the second charging circuit 407.

When a legacy TA (e.g., the power source device 410) supplies power to the electronic device 800, current limiting may be required for safe charging and battery protection to prevent a current exceeding an allowed current from being supplied to a battery (e.g., the first battery 408 and the second battery 409). The current limiting for each battery (e.g., the first battery 408 and the second battery 409) may be performed via an element included in a charging path (e.g., the charging path 970a and the charging path 980a) of each battery.

According to an embodiment, current limiting for the first battery 408 may be performed by a first transistor (e.g., an INFET) included in the first charging circuit 406. The INFET may refer to an FET positioned at an input terminal of a charging circuit (e.g., the first charging circuit 406 and the second charging circuit 407). The INFET may perform current regulation by controlling a value of drain-source resistance (R_{ds}) by controlling a gate voltage.

According to an embodiment, when current limiting is performed on the first battery 408 by the first transistor, the Qbat 450 included in the power management module 802 included in the electronic device 800 may not perform current limiting. For example, the Qbat 450 included in the power management module 802 may perform only a possible function (e.g., V_{sys} short detection, IBAT loop, a ship mode, etc.), and the first transistor included in the first charging circuit 406 may perform current limiting on the first battery 408.

According to an embodiment, current limiting for the second battery 409 may be performed by a second transistor (e.g., an INFET) included in the second charging circuit 407. The second transistor may refer to, for example, an FET positioned at an input terminal of the second charging circuit 407.

According to an embodiment, when current limiting on a battery (e.g., the first battery 408 and the second battery 409) is performed by an INFET (e.g., the first transistor and the second transistor), a function of a charging circuit (e.g., the first charging circuit 406 and the second charging circuit 407) may be activated or deactivated to perform current limiting on the battery (e.g., the first battery 408 and the second battery 409). For example, current limiting may be performed on the battery (e.g., the first battery 408 and the second battery 409) by deactivating a UCP function to prevent current reduction of the charging circuit (e.g., the first charging circuit 406 and the second charging circuit 407) or selectively using a function of the charging circuit (e.g., the first charging circuit 406 and the second charging circuit 407) based on a charging section (e.g., a CC section or a CV section).

According to an embodiment, when the legacy TA (e.g., the power source device 410) is connected to the connector 401, the power management module 802 may perform a buck-on operation and a charge-on operation. The buck-on operation may be an operation to supply power to a system via the third port 805. The charge-on operation may be an operation to supply power to a battery (e.g., the first battery 408 and the second battery 409) via the second port 804.

According to an embodiment, even when the electronic device 800 is connected to the power source device 410 (e.g., the legacy TA), for example, if the electronic device 800 consumes power due to heavy load, the electronic device 800 may receive power from a battery (e.g., the first battery 408 and the second battery 409).

According to an embodiment, a discharging path 971a may indicate a path through which the first battery 408 is discharged. For example, the first battery 408 may supply power to the system via the third port 805 through the first charging circuit 406 and the Qbat 450 and may be discharged. A discharging path 981a may indicate a path through which the second battery 409 is discharged, and for example, the second battery 409 may directly supply power to the system via the third port 805 through the second charging circuit 407 and the Qbat 450 and may be discharged. The discharging path 971a and the discharging path 981a may share a path after the second port 804.

FIG. 9B is a diagram illustrating an operation of the electronic device 800 when an external power source device of the second type (hereinafter, also referred to as a "PPS TA") that supports PPS is connected to the connector 401 of the electronic device 800 of FIG. 8.

Referring to FIG. 9B, according to an embodiment, the power source device 410 (e.g., the PPS TA) may be connected to the connector 401 via a cable to supply power to the electronic device 800. A charging path 970b may illustrate a path through which the first battery 408 is charged, and a charging path 980b may illustrate a path through which the second battery 409 is charged.

According to an embodiment, when the PPS TA is connected to the connector 401 and the electronic device 800 receives power, the first charging circuit 406 and the second charging circuit 407 may operate as n:1 charging pumps in which a voltage is multiplied by 1/n and a current is multiplied by n, thereby fast-charging a battery (e.g., the first battery 408 and the second battery 409). The first charging circuit 406 may be connected to the first battery 408 to charge the first battery 408, and the second charging circuit 407 may be connected to the second battery 409 to charge the second battery 409.

According to an embodiment, the charging path 970b may indicate a path through which the first battery 408 is charged. When the PPS TA is connected to the connector 401, the first switch 830 may connect the first charging circuit 406 to the first port 803. The first battery 408 may be charged by receiving power from the power source device 410 (e.g., the PPS TA) via the first charging circuit 406 from the connector 401.

According to an embodiment, the charging path 980b may indicate a path through which the second battery 409 is charged. The second battery 409 may be charged by receiving power from the power source device 410 via the second charging circuit 407 from the connector 401. When the PPS TA is connected to the connector 401, the second switch 840 may connect the first port 803 to the second charging circuit 407. The first charging circuit 406 and the second charging circuit 407 may operate as n:1 charging pumps (e.g., n is a natural number greater than or equal to 2) to charge the first battery 408 and the second battery 409, respectively.

According to an embodiment, when the PPS TA (e.g., the power source device 410) is connected to the connector 401, the power management module 802 may perform a buck-on operation to supply power to the system via the third port 805.

According to an embodiment, a discharging path 971b may indicate a path through which the first battery 408 is discharged. For example, the first battery 408 may supply power to the system via the third port 805 through the power management module 802 via the first port 803 through the first charging circuit 406 and may be discharged.

According to an embodiment, the discharging path 981b may indicate a path through which the second battery 409 is discharged, and for example, the second battery 409 may supply power to the system via the third port 805 through the power management module 802 via the first port 803 through the second charging circuit 407 and may be discharged.

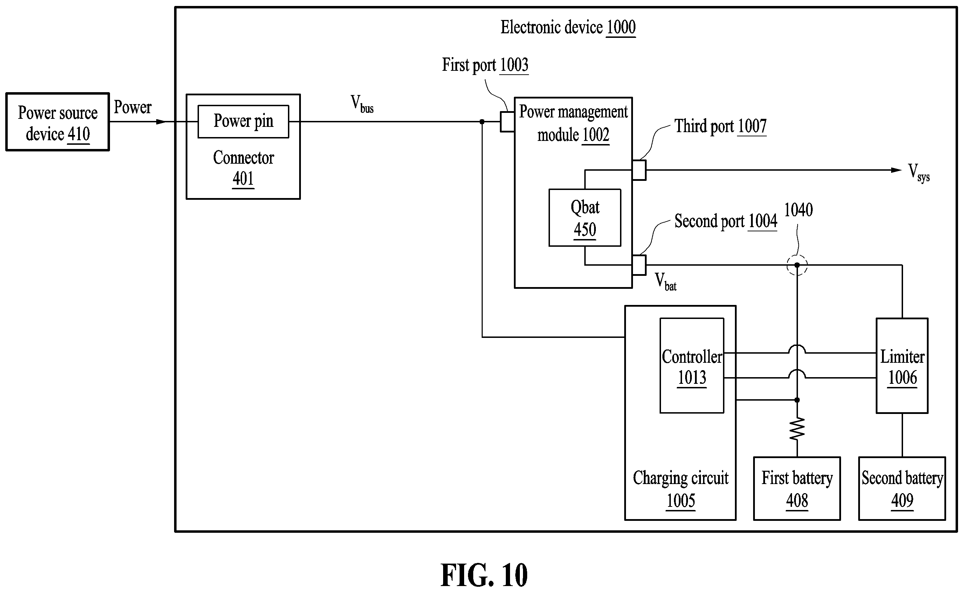

FIG. 10 is a block diagram illustrating an electronic device according to an embodiment.

Referring to FIG. 10, according to an embodiment, an electronic device 1000 (e.g., the electronic device 101 of FIG. 1 or the electronic device 300 of FIG. 3) may be a DRP device. The DRP device may indicate a device that may operate as a source for supplying power or as a sink for receiving power from a source. In the example illustrated in FIG. 10, a power source device 410 (e.g., the power source device 310 of FIG. 3) may operate as a source, and the electronic device 1000 may operate as a sink.

According to an embodiment, the electronic device 1000 may include the connector 401 (e.g., the connecting terminal 178 of FIG. 1 or the connecting terminal 301 of FIG. 3), a power management module 1002 (e.g., the power management module 188 of FIG. 1), the first battery 408 (e.g., the battery 189 of FIG. 1), the second battery 409 (e.g., the battery 189 of FIG. 1), a charging circuit 1005, a limiter 1006, and a controller 1030. At least one of components of the electronic device 1000 may be the same as or similar to at least one of the components of the electronic device 101 of FIG. 1, and a repeated description thereof is omitted.

According to an embodiment, the connector 401 may be connected to a cable of the power source device 410. The connector 401 may include a plurality of pins. The connector 401 may include one or more VBUS pins used for receiving power from the power source device 410, one or more communication pins used to perform communication between the electronic device 800 and the power source device 410, one or more ground pins, and a power pin for supplying power to the power source device 410 or receiving power from the power source device 410. The one or more communication pins may include, for example, a CC pin, a D+ pin, and a D- pin. The connector 401 may receive power from the power source device 410 via one or more VBUS pins.

According to an embodiment, the power source device 410 may include a legacy TA (e.g., an external power source device of the first type) that does not support a PPS function and a PPS TA (e.g., an external power source device of the second type) that supports the PPS function.

According to an embodiment, the power management module 1002 may manage power supplied to the electronic device 1000. For example, the power management module 1002 may be implemented as a part of an IF-PMIC. The IF-PMIC may be an IC that further includes an additional function in addition to a typical PMIC. The power management module 1002 may include a first port 1003 connected to the power pin, a second port 1004 connected to the first battery 408 and a connection node 1040 of the limiter 1006, a third port 1005 connected to a system power line, and the Qbat 450 that is a battery management module. The Qbat 450 may control charging and discharging processes of a battery (e.g., the first battery 408 and the second battery 409).

According to an embodiment, the first battery 408 and the second battery 409 may be connected in parallel. The first battery 408 and the second battery 409 may each be implemented as the battery 189 described with reference to FIGS. 1 and 2. For example, the first battery 408 and the second battery 409 may be implemented as the same two batteries 189.

According to an embodiment, the first battery 408 and the second battery 409 may be a main battery used as a main power source of the electronic device 400 and a sub-battery used as a backup power source, respectively, but the example is not limited thereto.

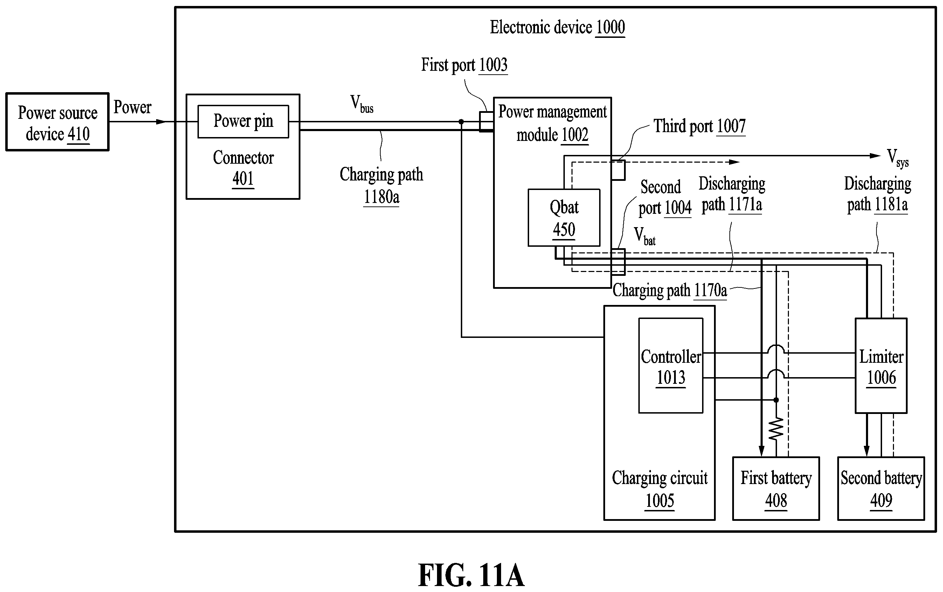

According to an embodiment, the limiter 1006 may be connected to the second battery 409 to perform current limiting on the second battery 409. For example, thereafter, when the electronic device 1000 is charged as the power source device 410 (e.g., the legacy TA), which is to be described below with reference to FIG. 11A, is connected to the connector 401, the limiter 1006 may perform current limiting on a battery (e.g., the second battery 409). A controller 1013 included in the charging circuit 1005 may control the limiter 1006. For example, the controller 1013 may control a limiter (e.g., the limiter 1006) to prevent overvoltage, low voltage, overcurrent, and short of a battery (e.g., the second battery 409) based on a state (e.g., the temperature) of the battery (e.g., the second battery 409) to protect the battery (e.g., the second battery 409).

According to an embodiment, the charging circuit 1005 may be connected to the first battery 408. The charging circuit 1005 may charge the first battery 408 and the second battery 409. For example, the charging circuit 1005 may include a DC IC. The DC IC may be a charger for fast-charging a battery (e.g., the first battery 408 and the second battery 409).

The first battery 408 and the second battery 409 according to an embodiment may share the charging circuit 1005, thereby sharing a functional block (e.g., an analog-to-digital converter (ADC) block, an inter-IC (I2C) block, a digital block, etc.). Functions performed by a block shared by the first battery 408 and the second battery 409 may include an input/output current and/or voltage detection function and a fuel gauge function. When the electronic device 1000 according to an embodiment uses a foldable battery, n (e.g., n is 2) external metal-oxide-semiconductor FETs (MOSFETs) (e.g., the limiter 1006) may be required, and accordingly, n controllers (e.g., the controller 1005) may be included in the electronic device 1000.

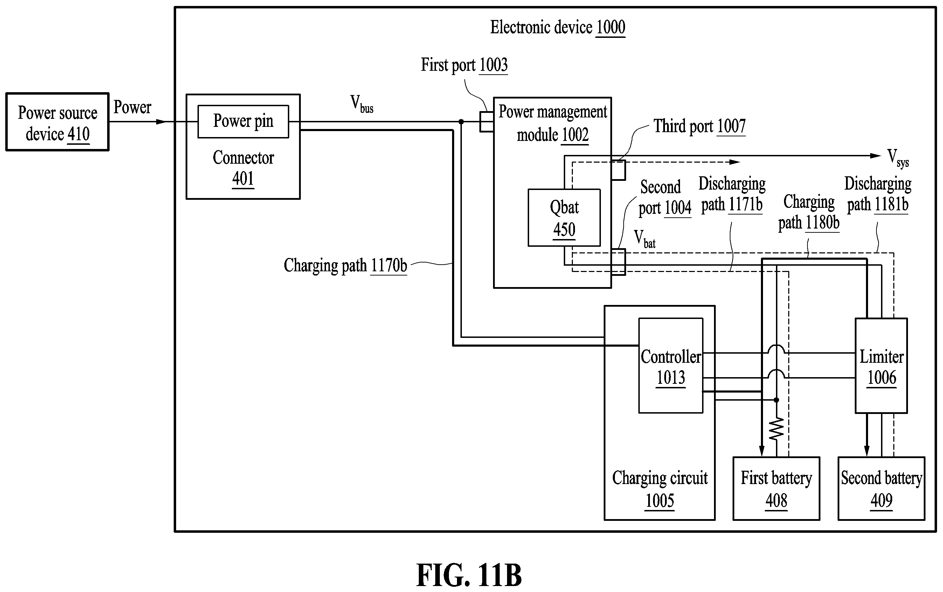

FIGS. 11A and 11B are diagrams illustrating charging and discharging paths of an electronic device according to an embodiment.

FIG. 11A is a diagram illustrating an operation of the electronic device 1000 when an external power source device of the first type (hereinafter, also referred to as a "legacy TA") that does not support PPS is connected to the connector 401 of the electronic device 1000 of FIG. 10.

Referring to FIG. 11A, according to an embodiment, the power source device 410 (e.g., the legacy TA) may be connected to the connector 401 via a cable to supply power to the electronic device 1000. A charging path 1170a may illustrate a path through which the first battery 408 is charged, and a charging path 1180a may illustrate a path through which the second battery 409 is charged.

According to an embodiment, the charging path 1170a may indicate a path through which the first battery 408 is charged. For example, the charging path 1170a may be a path for supplying power to the first battery 408 through the Qbat 450 in the power management module 1002 via the first port 1003 from the connector 401 and then through the second port 1004.

According to an embodiment, the charging path 1180a may indicate a path through which the second battery 409 is charged. For example, the charging path 1180a may be a path for supplying power to the second battery 409 through the Qbat 450 in the power management module 1002 via the first port 1003 from the connector 401 and then through the limiter 1006 via the second port 1004. The charging path 1180a may be a path for supplying power to the second battery 409, wherein the charging path 1180a shares a path with the charging path 1170a before the second port 1004, and then from the second port 1004, the path may be divided and pass through the limiter 1006.

When a legacy TA (e.g., the power source device 410) supplies power to the electronic device 1000, current limiting may be required for safe charging and battery protection to prevent a current exceeding an allowed current from being supplied to a battery (e.g., the first battery 408 and the second battery 409). The current limiting for each battery (e.g., the first battery 408 and the second battery 409) may be performed via an element included in a charging path (e.g., the charging path 1170a and the charging path 1180a) of each battery.

According to an embodiment, current limiting for the first battery 408 may be performed via the Qbat 450 included in the power management module 1002. For example, current limiting may be performed on the first battery 408 as an FET included in the Qbat 450 serves to perform current limiting other than functions (e.g., V_{sys} short detection, IBAT loop, a ship mode, etc.) performed by the Qbat 450.

According to an embodiment, current limiting for the second battery 409 may be performed by the limiter 1006. The limiter 1006 may be connected to the controller 1013 included in the charging circuit 1005 and may be controlled by the controller 1013.

According to an embodiment, even when the electronic device 1000 is connected to the power source device 410 (e.g., the legacy TA), for example, if the electronic device 1000 consumes power due to heavy load, the electronic device 1000 may receive power from a battery (e.g., the first battery 408 and the second battery 409).

According to an embodiment, a discharging path 1171a may indicate a path through which the first battery 408 is discharged. For example, the first battery 408 may supply power to the system via the third port 1005 after passing through the Qbat 450 via the second port 1004 and may be discharged. A discharging path 1181a may indicate a path through which the second battery 409 is discharged, and for example, the second battery 409 may directly supply power to the system via the third port 1005 through the limiter 1006, the second charging circuit 407, and the Qbat 450 and may be discharged. The discharging path 1171a and the discharging path 1181a may share a path after the second port 1004.

FIG. 11B is a diagram illustrating an operation of the electronic device 1000 when an external power source device of the second type (hereinafter, also referred to as a "PPS TA") that supports PPS is connected to the connector 401 of the electronic device 1000 of FIG. 10.

Referring to FIG. 11B, according to an embodiment, the power source device 410 (e.g., the PPS TA) may be connected to the connector 401 via a cable to supply power to the electronic device 1000. A charging path 1170b may illustrate a path through which the first battery 408 is charged, and a charging path 1180b may illustrate a path through which the second battery 409 is charged.

According to an embodiment, when the PPS TA is connected to the connector 401 and the electronic device 1000 receives power, both the first battery 408 and the second battery 409 may be charged through the charging circuit 1005. For example, the charging circuit 1005 may charge the first battery 408 and the second battery 409 in parallel. The charging path 1180b that is a path through which the second battery 409 is charged may be a divided path after the charging circuit 1005 from the charging path 1170b that is a path through which the first battery 408 is charged. For example, the charging path 1170b may be a path for supplying power to the first battery 408 through the charging circuit 1005 from the connector 401, and the charging path 1180b may be a path for supplying power to the second battery 409, wherein the charging path 1180b passes through the charging circuit 1005 from the connector 401 and then is divided from the charging path 1170b and additionally passes through the limiter 1006. The charging path 1170b may be shortened as the charging path 1170b does not pass through a limiter element (e.g., the limiter 1006) and supplies power to the first battery 408.

According to an embodiment, a discharging path 1171b may indicate a path through which the first battery 408 is discharged. For example, the first battery 408 may supply power to the system via the third port 1005 after passing through the Qbat 450 via the second port 1004 and may be discharged. A discharging path 1181b may indicate a path through which the second battery 409 is discharged, and for example, the second battery 409 may directly supply power to the system via the third port 1005 through the limiter 1006, the second charging circuit 407, and the Qbat 450 and may be discharged. The discharging path 1171b and the discharging path 1181b may share a path after the second port 1004. The discharging path 1171b and the discharging path 1181b may be substantially the same as the discharging path 1171a and the discharging path 1181a described with reference to FIG. 11A, respectively.

According to an embodiment, an electronic device (e.g., the electronic device 101 of FIG. 1, the electronic device 310 of FIG. 3, and the electronic device 400 of FIG. 4) may include a connector (e.g., the connecting terminal 178 of FIG. 1, the connector 301 of FIG. 3, and the connector 401 of FIG. 4) including a power pin for supplying or receiving power in relation to an external power source device (e.g., the external power source device 310 of FIG. 3 and the external power source device 410 of FIG. 4), a first charging circuit (e.g., the first charging circuit 406 of FIG. 4) connected to a first battery (e.g., the battery 189 of FIG. 1 and the battery 408 of FIG. 4), a second charging circuit (e.g., the second charging circuit 407 of FIG. 4) connected to a second battery (e.g., the battery 189 of FIG. 1 and the second battery 409 of FIG. 4), a power management module (e.g., the power management module 188 of FIG. 1 and the power management module 402 of FIG. 4) including a first port (e.g., the first port 403 of FIG. 4) connected to the power pin, a second port (e.g., the second port 404 of FIG. 4) connected to the first battery 189, 408 and a connection node (e.g., the connection node 440 of FIG. 4) of the first charging circuit 406, and a third port (e.g., the third port 405 of FIG. 4) connected to a system power line, and a first switch (e.g., the first switch 430 of FIG. 4) for selectively connecting the second charging circuit (e.g., the second charging circuit 407 of FIG. 4) to the first port 404 or the third port 405.

According to an embodiment, the second battery 189, 409 may have a parallel relationship with the first battery 189, 408.

According to an embodiment, the external power source device 310, 410 may include an external power source device of a first type that does not support PPS and an external power source device of a second type that supports PPS.

According to an embodiment, the first switch 430 may connect the second charging circuit 407 to the third port 405 when the external power source device of the first type is connected to the connector 178, 301, 401, and may connect the second charging circuit 407 to the first port 403 when the external power source device of the second type is connected to the connector 178, 301, 401.

According to an embodiment, when the electronic device 101, 300, 400 is charged as the external power source device of the first type is connected to the connector 178, 301, 401, current limiting for the first battery 189, 408 may be performed through a battery management module (e.g., the Qbat 450 of FIG. 4) included in the power management module 402, and current limiting for the second battery 189, 409 may be performed through a transistor included in the second charging circuit 407.

According to an embodiment, the transistor may be a transistor connected to an input terminal of the second charging circuit 407.

According to an embodiment, when the external power source device of the first type is connected to the connector 178, 301, 401 and the electronic device 101, 300, 400 consumes power, the first battery 189, 408 may be discharged to the system power line via the battery management module (e.g., the Qbat 450), and the second battery 189, 409 may be discharged to the system power line via the first switch 430.

According to an embodiment, when the electronic device 101, 300, 400 is charged as the external power source device of the second type is connected to the connector 178, 301, 401), the first battery 189, 408 may be charged via the first charging circuit 406 from the connector 178, 301, 401, and the second battery 189, 409 may be charged via the second charging circuit 407 from the connector 178, 301, 401.

According to an embodiment, when the external power source device of the second type is connected to the connector 178, 301, 401 and the electronic device 101, 300, 400 consumes power, the first battery 189, 408 may be discharged to the system power line via the battery management module (e.g., the Qbat 450), and the second battery 189, 409 may be discharged to the system power line through the first port 403 via the first switch 430.

The electronic device 101, 300, 400 according to an embodiment may further include a second switch (e.g., the second switch 440 of FIG. 6) for selectively connecting the second battery 189, 409 to the system power line.

According to an embodiment, when the external power source device of the second type is connected to the connector 178, 301, 401 and the electronic device 101, 300, 400 consumes power, the second battery 189, 409 may be discharged to the system power line via the second switch 440.

According to an embodiment, an electronic device (e.g., the electronic device 101 of FIG. 1, the electronic device 300 of FIG. 3, and the electronic device 800 of FIG. 8) may include a connector (e.g., the connecting terminal 178 of FIG. 1, the connector 301 of FIG. 3, and the connector 401 of FIG. 8) including a power pin for supplying or receiving power in relation to an external power source device (e.g., the external power source device 310 of FIG. 3 and the external power source device 410 of FIG. 8), a first charging circuit (e.g., the first charging circuit 406 of FIG. 8) connected to a first battery (e.g., the battery 189 of FIG. 1 and the second battery 408 of FIG. 8), a second charging circuit (e.g., the second charging circuit 407 of FIG. 8) connected to a second battery 189, 409, a power management module (e.g., the power management module 188 of FIG. 1 and the power management module 802 of FIG. 8) including a first port (e.g., the first port 803 of FIG. 8) connected to the power pin, a second port (e.g., the second port 804 of FIG. 8) connected to the first charging circuit 406 and a connection node (e.g., the connection node 850 of FIG. 8) of the second charging circuit 407, and a third port (e.g., the third port 805 of FIG. 8) connected to a system power line, a first switch (e.g., the first switch 830 of FIG. 8) for selectively connecting the first charging circuit 406 to the first port 803 or the second port 804, and a second switch (e.g., the second switch 840 of FIG. 8) for selectively connecting the second charging circuit 407 to the first port 803 or the second port 804.

According to an embodiment, the second battery 189, 409 may have a parallel relationship with the first battery 189, 408.

According to an embodiment, the external power source device 310, 410 may include an external power source device of a first type that does not support PPS and an external power source device of a second type that supports PPS.

According to an embodiment, when the electronic device 101, 300, 800 is charged as the external power source device of the first type is connected to the connector 178, 301, 401, the first battery 189, 408 and the second battery 189, 409 may receive power via a battery management module (e.g., the Qbat 450 of FIG. 8) included in the power management module 188, 802 from the connector 178, 301, 401.

According to an embodiment, when the electronic device 101, 300, 800 is charged as the external power source device of the first type is connected to the connector 178, 301, 401, current limiting for the first battery 189, 408 may be performed through a first transistor included in the first charging circuit 406, and current limiting for the second battery 189, 409 may be performed through a second transistor included in the second charging circuit 407. The first transistor may be a transistor connected to an input terminal of the first charging circuit 406, and the second transistor may be a transistor connected to an input terminal of the second charging circuit 407.

According to an embodiment, the first switch 830 may connect the first charging circuit 406 to the second port 804 when the external power source device of the first type is connected to the connector 178, 301, 401, and may connect the first charging circuit 406 to the first port 803 when the external power source device of the second type is connected to the connector 178, 301, 401.

According to an embodiment, the second switch 840 may connect the second charging circuit 407 to the second port 804 when the external power source device of the first type is connected to the connector 178, 301, 401, and may connect the second charging circuit 407 to the first port 803 when the external power source device of the second type is connected to the connector 178, 301, 401.

According to an embodiment, an electronic device (e.g., the electronic device 101 of FIG. 1, the electronic device 300 of FIG. 3, and the electronic device 1000 of FIG. 10) may include a connector (e.g., the connecting terminal 178 of FIG. 1, the connector 301 of FIG. 3, and the connector 401 of FIG. 4) including a power pin for supplying or receiving power in relation to an external power source device (e.g., the external power source device 310 of FIG. 3 and the external power source device 1010 of FIG. 10), a charging circuit (e.g., the charging circuit 1005 of FIG. 10) connected to a first battery (e.g., the battery 189 of FIG. 1 and the first battery 408 of FIG. 10), a limiter (e.g., the limiter 1006 of FIG. 10) connected to a second battery (e.g., the battery 189 of FIG. 1 and the second battery 408 of FIG. 10) that has a parallel relationship with the first battery 189, 408, and a power management module (e.g., the power management module 188 of FIG. 1 and the power management module 1002 of FIG. 10) including a first port (e.g., the first port 1003 of FIG. 10) connected to the power pin, a second port (e.g., the second port 1004 of FIG. 10) connected to the first battery 189, 408 and a connection node (e.g., the connection node 1040 of FIG. 10) of the limiter 1006, and a third port (e.g., the third port 1005 of FIG. 10) connected to a system power line. The charging circuit 1005 may include the controller 1013 configured to control the limiter 1006.

According to an embodiment, when the external power source device 310, 410 does not support PPS and is connected to the connector 178, 301, 401 to charge the electronic device 101, 300, 1000, current limiting for the first battery 189, 408 may be performed through the battery management module 450 included in the power management module 188, 1002, and current limiting for the second battery 189, 409 may be performed through the limiter 1006.

According to an embodiment, when the electronic device 101, 300, 1000 is charged as the external power source device 310, 410 is connected to the connector 178, 301, 401, the first battery 189, 408 may be charged via the controller 1013 from the connector 178, 301, 401.

According to an embodiment, when the electronic device 101, 300, 1000 consumes power, the first battery 189, 408 may be discharged to the system power line via the second port 1004 and a battery management module (e.g., the Qbat 450 of FIG. 10) included in the power management module 188, 1002.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1740) including one or more instructions that are stored in a storage medium (e.g., internal memory 1736 or external memory 1738) that is readable by a machine (e.g., the electronic device 1701). For example, a processor (e.g., the processor 1720) of the machine (e.g., the electronic device 1701) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 300; 400) comprising:
a connector (178; 301; 401) comprising a power pin for supplying or receiving power in relation to an external power source device (310; 410);
a first charging circuit (406) connected to a first battery (189; 408);
a second charging circuit (407) connected to a second battery (189; 409);
a power management module (188; 402) comprising a first port (403) connected to the power pin, a second port (404) connected to the first battery (189; 408) and a connection node (440) of the first charging circuit (406), and a third port (405) connected to a system power line; and
a first switch (430) for selectively connecting the second charging circuit (407) to the first port (404) or the third port (405).

2. The electronic device (101; 300; 400) of claim 1,
wherein the second battery (189; 409) has a parallel relationship with the first battery (189; 408).

3. The electronic device (101; 300; 400) of one of claims 1 to 2,
wherein the external power source device (310; 410) comprises:
an external power source device of a first type that does not support programmable power supply (PPS); and
an external power source device of a second type that supports PPS.

4. The electronic device (101; 300; 400) of one of claims 1 to 3,
wherein the first switch (430) connects the second charging circuit (407) to the third port (405) when the external power source device of the first type is connected to the connector (178; 301; 401), and
connects the second charging circuit (407) to the first port (403) when the external power source device of the second type is connected to the connector (178; 301; 401).

5. The electronic device (101; 300; 400) of one of claims 1 to 4,
wherein, when the electronic device (101; 300; 400) is charged as the external power source device of the first type is connected to the connector (178; 301; 401),
current limiting for the first battery (189; 408) is performed through a battery management module (Qbat) (450) comprised in the power management module (402), and current limiting for the second battery (189; 409) is performed through a transistor comprised in the second charging circuit (407).

6. The electronic device (101; 300; 400) of one of claims 1 to 5,
wherein the transistor is a transistor connected to an input terminal of the second charging circuit (407).

7. The electronic device (101; 300; 400) of one of claims 1 to 6,
wherein, when the external power source device of the first type is connected to the connector (178; 301; 401) and the electronic device (101; 300; 400) consumes power,
the first battery (189; 408) is discharged to the system power line via the battery management module (450), and the second battery (189; 409) is discharged to the system power line via the first switch (430).

8. The electronic device (101; 300; 400) of one of claims 1 to 7,
wherein, when the electronic device (101; 300; 400) is charged as the external power source device of the second type is connected to the connector (178; 301; 401),
the first battery (189; 408) is charged via the first charging circuit (406) from the connector (178; 301; 401), and the second battery (189; 409) is charged via the second charging circuit (407) from the connector (178; 301; 401).

9. The electronic device (101; 300; 400) of one of claims 1 to 8,
wherein, when the external power source device of the second type is connected to the connector (178; 301; 401) and the electronic device (101; 300; 400) consumes power,
the first battery (189; 408) is discharged to the system power line via the battery management module (450), and the second battery (189; 409) is discharged to the system power line through the first port (403) via the first switch (430).

10. The electronic device (101; 300; 400) of one of claims 1 to 9,
wherein the electronic device (101; 300; 400) further comprises:
a second switch (440) for selectively connecting the second battery (189; 409) to the system power line.

11. The electronic device (101; 300; 400) of one of claims 1 to 10,
wherein, when the external power source device of the second type is connected to the connector (178; 301; 401) and the electronic device (101; 300; 400) consumes power,
the second battery (189; 409) is discharged to the system power line via the second switch (440).

12. An electronic device (101; 300; 800) comprising:
a connector (178; 301; 401) comprising a power pin for supplying or receiving power in relation to an external power source device (310; 410);
a first charging circuit (406) connected to a first battery (189: 408);
a second charging circuit (407) connected to a second battery (189: 409);
a power management module (188; 802) comprising a first port (803) connected to the power pin, a second port (804) connected to the first charging circuit (406) and a connection node (850) of the second charging circuit (407), and a third port (805) connected to a system power line;
a first switch (830) for selectively connecting the first charging circuit (406) to the first port (803) or the second port (804); and
a second switch (840) for selectively connecting the second charging circuit (407) to the first port (803) or the second port (804).

13. The electronic device (101; 300; 800) of claim 12,
wherein the second battery (189; 409) has a parallel relationship with the first battery (189; 408).

14. An electronic device (101; 300; 1000) comprising:
a connector (178; 301; 401) comprising a power pin for supplying or receiving power in relation to an external power source device (310; 410);
a charging circuit (1005) connected to a first battery (189: 408);
a limiter (1006) connected to a second battery (189; 408) that has a parallel relationship with the first battery (189; 408); and
a power management module (188; 1002) comprising a first port (1003) connected to the power pin, a second port (1004) connected to the first battery (189; 408) and a connection node (1040) of the limiter (1006), and a third port (1005) connected to a system power line,
wherein the charging circuit (1005) comprises a controller (1013) configured to control the limiter (1006).

15. The electronic device (101; 300; 1000) of claim 14,
wherein, when the external power source device (310; 410) does not support programmable power supply (PPS) and is connected to the connector (178; 301; 401) to charge the electronic device (101; 300; 1000),
current limiting for the first battery (189; 408) is performed through a battery management module (450) comprised in the power management module (188; 1002), and
current limiting for the second battery (189; 409) is performed by the limiter (1006).
